(19)

**Europäisches Patentamt**
**European Patent Office**
**Office européen des brevets**

(11) **EP 4 372 410 A1**

(12) **EUROPEAN PATENT APPLICATION**
published in accordance with Art. 153(4) EPC

(43) Date of publication:
**22.05.2024 Bulletin 2024/21**

(21) Application number: **22840964.5**

(22) Date of filing: **17.03.2022**

(51) International Patent Classification (IPC):
**G01S 7/4865** (2020.01)    **G01S 17/89** (2020.01)

(52) Cooperative Patent Classification (CPC):
**G01S 7/48; G01S 7/4865; G01S 17/42; G01S 17/89**

(86) International application number:
**PCT/CN2022/081307**

(87) International publication number:
**WO 2023/284319 (19.01.2023 Gazette 2023/03)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **16.07.2021 CN 202110806513**

(71) Applicant: **Hesai Technology Co., Ltd.**
**Shanghai 201821 (CN)**

(72) Inventors:
• **XU, Shuaiqi**
 **Shanghai 201821 (CN)**
• **ZHANG, Hongyan**
 **Shanghai 201821 (CN)**
• **YANG, Jin**
 **Shanghai 201821 (CN)**
• **XIANG, Shaoqing**
 **Shanghai 201821 (CN)**

(74) Representative: **Fish & Richardson P.C.**
**Highlight Business Towers**
**Mies-van-der-Rohe-Straße 8**
**80807 München (DE)**

(54) **LIDAR RANGING METHOD, LIDAR AND COMPUTER-READABLE STORAGE MEDIUM**

(57)    Provided are a ranging method for a LiDAR, a LiDAR, and a computer-readable storage medium. The ranging method (10) includes: S101: acquiring multiple frames of detection data of a three-dimensional environment; S102: predicting, based on at least part of previous k frames of the detection data, a position where an obstacle is located in the three-dimensional environment during the $(k + 1)^{th}$ detection, where k is an integer, and $k \geq 1$; S103: when performing the $(k + 1)^{th}$ detection, changing, based on predicted position information of the obstacle, a range of a detection window for at least one point on the obstacle; and S104: calculating ranging information of the at least one point only based on echo information within the changed detection window. The range of the detection window is changed based on the feedback of a detection result, and detection is performed only within a distance range where an obstacle is present, thereby saving storage space and reducing calculation requirements or power consumption.

<u>10</u>

S101
Acquire multiple frames of detection data of three-dimensional environment

S102
Predict, based on at least part of previous k frames of detection data, position where obstacle is located in three-dimensional environment during $(k + 1)^{th}$ detection, wherein k is integer, and $k \geq 1$

S103
When performing $(k + 1)^{th}$ detection, change, based on predicted position information of obstacle, range of detection window for point on obstacle

S104
Calculate ranging information of at least one point only based on echo information within changed detection window

S105
When no obstacle is detected within range of changed detection window during $(k + 1)^{th}$ detection, change range of detection window during $(k + 2)^{th}$ detection to range of initial detection window

FIG. 1

EP 4 372 410 A1

**Description**

**TECHNICAL FIELD**

This disclosure relates to the field of photoelectric detection, and in particular, to a ranging method for a LiDAR, a LiDAR, and a computer-readable storage medium.

**BACKGROUND**

A LiDAR typically includes a transmitter unit, a photoelectric detector unit, and a signal processor unit. The transmitter unit can transmit a detection laser beam to a three-dimensional environment surrounding the LiDAR, the detection laser beam undergoes diffuse reflection on an object in the three-dimensional environment, and part of the echo returns to the LiDAR. The photoelectric detector unit receives the echo and converts the echo into an electrical signal. The signal processor unit is coupled to the photoelectric detector unit for receiving the electrical signal, calculates time of flight ("TOF") of the echo based on the electrical signal, and calculates ranging information of the obstacle, such as the distance and the orientation.

Typically, the transmitter unit transmits a detection laser beam, correspondingly, at least one of the photoelectric detector unit or signal processor unit is always kept on within a predetermined range of a detection window to receive the echo, and the detection window is typically determined based on a predetermined maximum detection distance of the LiDAR. In this way, it can be ensured that the photoelectric detector unit and the signal processor unit can receive and process the echo from the object. However, the photoelectric detector unit and the signal processor unit also receive and process a large amount of noise optical signals or ambient optical signals from the surrounding environment within the detection window so that the echo signal received by the LiDAR has a low signal-to-noise ratio and more power is consumed, thereby reducing precision and speed of distance calculation.

The content disclosed in this background is merely techniques known to the applicants and does not necessarily represent the existing technology in the field.

**SUMMARY**

In view of at least one of the disadvantages in the existing technology, this disclosure designs a ranging method for a LiDAR. The range of a detection window is changed based on the feedback of a detection result, and detection is performed only within a distance range where an obstacle is present, thereby saving storage space, and reducing calculation requirements or power consumption.

This disclosure provides a ranging method for a LiDAR. The ranging method includes:

S101: acquiring multiple frames of detection data of a three-dimensional environment;
S102: predicting, based on at least part of previous k frames of the detection data, a position where an obstacle is located in the three-dimensional environment during a $(k + 1)^{th}$ detection, k is an integer, and $k \geq 1$;
S103: when performing the $(k + 1)^{th}$ detection, changing, based on predicted position information of the obstacle, a range of a detection window for at least one point on the obstacle; and
S104: calculating ranging information of the at least one point only based on echo information within the changed detection window.

In an aspect of this disclosure, the detection data includes at least one of a relative orientation or a distance from the LiDAR, and the step S101 includes: acquiring, based on a range of an original detection window, k frames of the detection data of the three-dimensional environment, the range of the original detection window is associated with a predetermined maximum detection distance of the LiDAR.

In an aspect of this disclosure, the step S102 includes:

identifying a type of the obstacle;
calculating a speed of the obstacle based on the type of the obstacle and the previous k frames of the detection data; and
predicting, based on the speed of the obstacle, the position where the obstacle is located during the $(k + 1)^{th}$ detection.

In an aspect of this disclosure, the step S102 further includes: determining at least one of a size or a motion parameter of the obstacle based on a mutual correlation between multiple points in the detection data in conjunction with an object identification technique.

In an aspect of this disclosure, k > 1, and the step S102 includes:

predicting, based on a relative position change of the obstacle during previous k detections and a time interval between adjacent detections, the position where the obstacle is located during the $(k + 1)^{th}$ detection.

In an aspect of this disclosure, the step S103 includes:

obtaining, based on the predicted position information of the obstacle, corresponding predicted TOF for any point on the obstacle; and

changing a central position of the corresponding detection window to the predicted TOF, and changing the range of the corresponding detection window to [predicted TOF - time window, predicted TOF + time window], the time window is a predetermined value or is associated with at least one of the size or the speed of the obstacle.

In an aspect of this disclosure, the time window increases as at least one of the size or the speed of the obstacle increase.

In an aspect of this disclosure, the LiDAR includes a receiver unit, the receiver unit includes a photodetector, a time-to-digital converter, and a memory, the photodetector is configured to receive an echo and convert the echo into an electrical signal, the time-to-digital converter is configured to receive the electrical signal and output TOF of the echo, and the memory is configured to store the TOF of the echo; the step S104 further includes:

in an aspect of this disclosure, turning on the photodetector of the LiDAR within the range of the changed detection window, and turning off the photodetector outside the range of the changed detection window; or

in an aspect of this disclosure, always keeping the photodetector and the time-to-digital converter on, and storing, by the memory, only the TOF of the echo outputted by the time-to-digital converter within the range of the changed detection window; or

during the $(k + 1)^{th}$ detection, always keeping the photodetector on, and turning on the time-to-digital converter only within the range of the changed detection window.

In an aspect of this disclosure, the ranging method further includes:

S105: when no obstacle is detected within the range of the changed detection window during the $(k + 1)^{th}$ detection, changing the range of the detection window during a $(k + 2)^{th}$ detection to a range of an original detection window.

This disclosure also provides a LiDAR. The LiDAR includes:

a transmitter unit, configured to transmit a detection laser beam for detecting a three-dimensional environment;

a photoelectric detector unit, including multiple photodetectors and configured to receive an echo from an obstacle and convert the echo into an electrical signal;

a signal processor unit, coupled to the photoelectric detector unit to receive the electrical signal and calculate ranging information of the obstacle based on the electrical signal; and

a controller, coupled to the photoelectric detector unit and the signal processor unit and configured to perform the following operations:

acquiring multiple frames of detection data of the three-dimensional environment;

predicting, based on at least part of previous k frames of the detection data, a position where the obstacle is located in the three-dimensional environment during a $(k + 1)^{th}$ detection, k is an integer, and $k \geq 1$; and

when performing the $(k + 1)^{th}$ detection, changing, based on predicted position information of the obstacle, a range of a detection window for at least one point on the obstacle;

the signal processor unit is configured to, when performing the $(k + 1)^{th}$ detection, calculate ranging information of the at least one point on the obstacle only based on echo information within the range of the changed detection window.

In an aspect of this disclosure, the detection data includes at least one of a relative orientation or a distance from the LiDAR, and the operation of acquiring multiple frames of detection data of the three-dimensional environment includes: acquiring, based on a range of an original detection window, k frames of the detection data of the three-dimensional environment, the range of the original detection window is associated with a predetermined maximum detection distance of the LiDAR.

In an aspect of this disclosure, the controller is configured to predict the position where the obstacle is located during the $(k + 1)^{th}$ detection in the following manner:

identifying a type of the obstacle;

calculating a speed of the obstacle based on the type of the obstacle and the previous k frames of the detection data; and

predicting, based on the speed of the obstacle, the position where the obstacle is located during the $(k + 1)^{th}$ detection.

In an aspect of this disclosure, the controller is configured to determine at least one of a size or a motion parameter of the obstacle based on a mutual correlation between multiple points in the detection data in conjunction with an object identification technique.

In an aspect of this disclosure, k > 1, and the controller is configured to predict a distance from the obstacle during the $(k + 1)^{th}$ detection in the following manner:

predicting, based on a relative position change of the obstacle during previous k detections and a time interval between adjacent detections, the position where the obstacle is located during the $(k + 1)^{th}$ detection.

In an aspect of this disclosure, the controller is configured to change the range and a position of the detection window during the $(k + 1)^{th}$ detection in the following manner:

obtaining, based on the predicted position information of the obstacle, corresponding predicted TOF for any point on the obstacle;

changing a central position of the corresponding detection window to the predicted TOF; and

changing the range of the corresponding detection window to [predicted TOF - time window, predicted TOF + time window], the time window is a predetermined value or is associated with at least one of the size or the speed of the obstacle.

In an aspect of this disclosure, the time window increases as at least one of the size or the speed of the obstacle increase.

In an aspect of this disclosure, the LiDAR further includes a time-to-digital converter and a memory, the time-to-digital converter is configured to receive the electrical signal and output TOF of the echo, and the memory is configured to store the TOF of the echo;

during the $(k + 1)^{th}$ detection, the photodetector of the LiDAR is turned on within the range of the changed detection window, and the photodetector is turned off outside the range of the changed detection window; or

during the $(k + 1)^{th}$ detection, the photodetector and the time-to-digital converter are always kept on, and the memory stores only the TOF of the echo outputted by the time-to-digital converter within the range of the changed detection window; or

during the $(k + 1)^{th}$ detection, the photodetector is always kept on, and the time-to-digital converter is turned on only within the range of the changed detection window.

In an aspect of this disclosure, the controller is configured to, when no obstacle is detected within the range of the changed detection window during the $(k + 1)^{th}$ detection, change the range of the detection window during a $(k + 2)^{th}$ detection to the range of the original detection window.

This disclosure also provides a computer-readable storage medium having computer-executable instructions stored thereon. The computer-executable instructions, when executed by a processor, perform the ranging method based on any one of claims 1-9.

Through the solutions provided by this disclosure, the range of a detection window is changed based on the feedback of the detection result, and detection is performed only within a distance range where an obstacle is present, thereby reducing calculation requirements, saving storage space, reducing power consumption, and improving the signal-to-noise ratio.

## BRIEF DESCRIPTION OF THE DRAWINGS

The drawings forming a part of this disclosure are used to provide a further understanding of this disclosure. The example embodiments and descriptions thereof in this disclosure are used to explain this disclosure and do not form an undue limitation on this disclosure. In the drawings:

FIG. 1 shows a flowchart of a method based on an embodiment of this disclosure.
FIG. 2 shows a block diagram of a photoelectric detector unit based on an embodiment of this disclosure.
FIG. 3a shows a scenario diagram of the first detection based on an embodiment of this disclosure.
FIG. 3b shows a scenario diagram of the second detection based on an embodiment of this disclosure.
FIG. 3c shows a scenario diagram of the third detection based on an embodiment of this disclosure.
FIG. 3d shows a scenario diagram of the fourth detection based on an embodiment of this disclosure.
FIG. 4 shows a top view of a detection scenario based on an embodiment of this disclosure.
FIG. 5 shows a schematic diagram of the triggering of a single photon avalanche diode in the process of multiple detection sweeps of a LiDAR.
FIG. 6 shows a histogram formed by accumulating multiple detection sweeps of a LiDAR.

FIG. 7a shows a field of view and a histogram of a total of 400 detections of a LiDAR based on an embodiment of this disclosure.

FIG. 7b shows a field of view and a histogram of the first 300 detections of a LiDAR based on an embodiment of this disclosure.

FIG. 7c shows a field of view and a histogram of the subsequent 100 detections of a LiDAR based on some embodiments of this disclosure.

FIG. 8 shows a schematic diagram of a data processing method based on an embodiment of this disclosure.

FIG. 9 shows a schematic diagram of a data storage method of the existing technology.

FIGS. 10 and 11 show schematic diagrams of a storage manner based on preferred embodiments of this disclosure.

FIG. 12 shows a schematic diagram of a storage effect based on an embodiment of this disclosure.

FIG. 13 shows a module diagram of a LiDAR based on an embodiment of this disclosure.

## DETAILED DESCRIPTION

In the following, some example embodiments are described. The described embodiments can be modified in various different ways without departing from the spirit or scope of this disclosure, as would be apparent to those skilled in the art. Accordingly, the drawings and descriptions are to be regarded as illustrative and not restrictive in nature.

In the description of this disclosure, it needs to be understood that the orientation or position relations represented by such terms as "central" "longitudinal" "latitudinal" "length" "width" "thickness" "above" "below" "front" "rear" "left" "right" "vertical" "horizontal" "top" "bottom" "inside" "outside" "clockwise" "counterclockwise" and the like are based on the orientation or position relations as shown in the accompanying drawings, and are used only for the purpose of facilitating description of this disclosure and simplification of the description, instead of indicating or suggesting that the represented devices or elements must be oriented specifically, or configured or operated in a specific orientation. Thus, such terms should not be construed to limit this disclosure. In addition, such terms as "first" and "second" are only used for the purpose of description, rather than indicating or suggesting relative importance or implicitly indicating the number of the represented technical features. Accordingly, features defined with "first" and "second" can, expressly or implicitly, include one or more of the features. In the description of this disclosure, "plurality" means two or more, unless otherwise defined explicitly and specifically.

In the description of this disclosure, it needs to be noted that, unless otherwise specified and defined explicitly, such terms as "installation" "coupling" and "connection" should be broadly understood as, for example, fixed connection, detachable connection, or integral connection; or mechanical connection, electrical connection or intercommunication; or direct connection, or indirect connection via an intermediary medium; or internal communication between two elements or interaction between two elements. For those skilled in the art, the specific meanings of such terms herein can be construed in light of the specific circumstances.

Herein, unless otherwise specified and defined explicitly, if a first feature is "on" or "beneath" a second feature, this can cover direct contact between the first and second features, or contact via another feature therebetween, other than the direct contact. Furthermore, if a first feature is "on", "above", or "over" a second feature, this can cover the case that the first feature is right above or obliquely above the second feature, or just indicate that the level of the first feature is higher than that of the second feature. If a first feature is "beneath", "below", or "under" a second feature, this can cover the case that the first feature is right below or obliquely below the second feature, or just indicate that the level of the first feature is lower than that of the second feature.

The following disclosure provides many different embodiments or examples to implement different structures of this disclosure. To simplify the disclosure, the following gives the description of the parts and arrangements embodied in some examples. They are only for the example purpose, not intended to limit this disclosure. Besides, this disclosure can repeat at least one of a reference number or reference letter in different examples, and such repeat is for the purpose of simplification and clarity, which does not represent any relation among various embodiments and/or arrangements as discussed. In addition, this disclosure provides examples of various specific processes and materials, but those skilled in the art can also be aware of application of other processes and/or use of other materials.

This disclosure designs a ranging method for a LiDAR. The range of a detection window is changed based on the feedback of a detection result, and detection is performed only within a distance range where an obstacle is present, thereby saving storage space, reducing calculation requirements or power consumption, and improving the signal-to-noise ratio.

Typically, a transmitter unit of a LiDAR transmits a detection laser beam, a corresponding at least one of photoelectric detector unit or subsequent signal processor unit are always kept on within a predetermined range of the detection window to receive an echo, and the detection window is typically determined based on a predetermined maximum detection distance of the LiDAR. In this way, it can be ensured that the photoelectric detector unit and the signal processor unit can receive and process the echo from an object. However, the photoelectric detector unit and the signal processor unit also receive and process a large amount of noise optical signals or ambient optical signals from the surrounding environment within the detection window so that the echo signal received by the LiDAR has a low signal-to-noise ratio and a large amount of power is consumed, thereby reducing precision and speed of distance calculation.

This disclosure provides an improved solution. The position where an obstacle is located during the $(k + 1)^{th}$ detection can be predicted at least partially based on the previous one or more frames of detection data, the position of the detection window during the $(k + 1)^{th}$ detection is changed based on the predicted position information, and distance calculation is performed only based on echo information within the changed detection window.

Preferred embodiments of this disclosure are described in detail in conjunction with the drawings, and it should be understood that the preferred embodiments described hereinafter are only intended to describe and explain this disclosure and not to limit this disclosure.

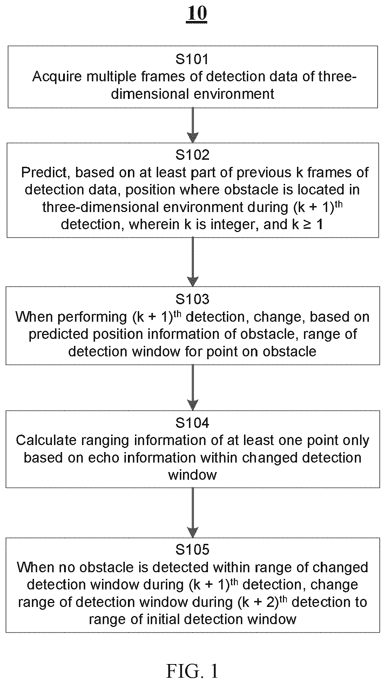

FIG. 1 shows a ranging method 10 for a LiDAR based on some embodiments of this disclosure. The ranging method 10 is described in detail with reference to the drawings.

In step S101, a LiDAR scans an entire field of view ("FOV"), and acquires multiple frames of detection data of a three-dimensional environment.

For a mechanical LiDAR, the mechanical LiDAR can rotate around its rotation axis at a frequency of 10 Hz or 20 Hz, and for every rotation, each detection channel (e.g., including one laser and one detector) performs laser transmission and echo reception at a certain angle resolution (e.g., 0.1° or 0.2 °). If the detector receives a valid echo (e.g., the amplitude of the echo exceeds a threshold), detection data (e.g., including at least one of a distance from an object or an orientation of the object relative to the LiDAR) is calculated based on the information of the valid echo to generate a certain point. The collection of points generated during one rotation of the mechanical LiDAR forms one frame of the point cloud. For a solid-state LiDAR or a semi-solid-state LiDAR, similarly, the point cloud collection formed after all detection channels complete detection forms one frame of the point cloud.

In step S101, the LiDAR scans the FOV and acquires the multiple frames of detection data, which can be used in the subsequent steps. The detection data can include, for example, at least one of a relative orientation or a distance of the detected object from the LiDAR and a reflectivity of the detected object.

In step S102, a position where an obstacle is located in the three-dimensional environment during the $(k + 1)^{th}$ detection is predicted based on at least part of previous k frames of the detection data, where k is an integer, and $k \geq 1$.

In step S102, based on the point cloud information obtained from the several previous frames (e.g., the previous three frames) of detection data, an approximate change of the obstacle during the next frame (e.g., the fourth frame) is predicted. For example, in some embodiments of this disclosure, an obstacle in the three-dimensional environment is respectively identified based on the previous k frames of the point cloud, and then, based on a change in the position of the same obstacle in the previous k frames of the point cloud, a position and an orientation of the obstacle when the LiDAR performs the $(k + 1)^{th}$ detection can be predicted.

In step S103, when performing the $(k + 1)^{th}$ detection, the range of a corresponding detection window is changed based on the predicted position information of the obstacle for at least one point on the obstacle.

In step S103, when the LiDAR performs the $(k + 1)^{th}$ detection, for at least one point or all points on the obstacle or points within a certain FOV range, the range of the detection window in which these selected points are detected is changed based on the position of the obstacle predicted in step S102. For example, the detection window can be narrowed. A specific manner of changing the range of the detection window is described in detail below.

After the LiDAR scans the entire predetermined detection FOV, one complete frame of point cloud information is obtained, one frame of the point cloud information can be obtained from one detection (which can include multiple sweeps), and the point cloud information is used for the prediction in the subsequent step. It should be understood that the more frames are used, the richer the point cloud information is, enabling the prediction result to be the closer to the reality. However, more calculation amounts and power consumption can be resulted in, and the real-time performance, calculation amount, and power consumption can be balanced based on actual requirements.

In step S104, ranging information of the at least one point is calculated only based on echo information within the changed detection window.

The range of the detection window is changed for at least one point on the obstacle in step S103, and the ranging information is calculated only based on an echo within the changed detection window in step S104, thereby reducing the calculation amount or power consumption of the LiDAR and improving the signal-to-noise ratio. A specific implementation is described in detail below.

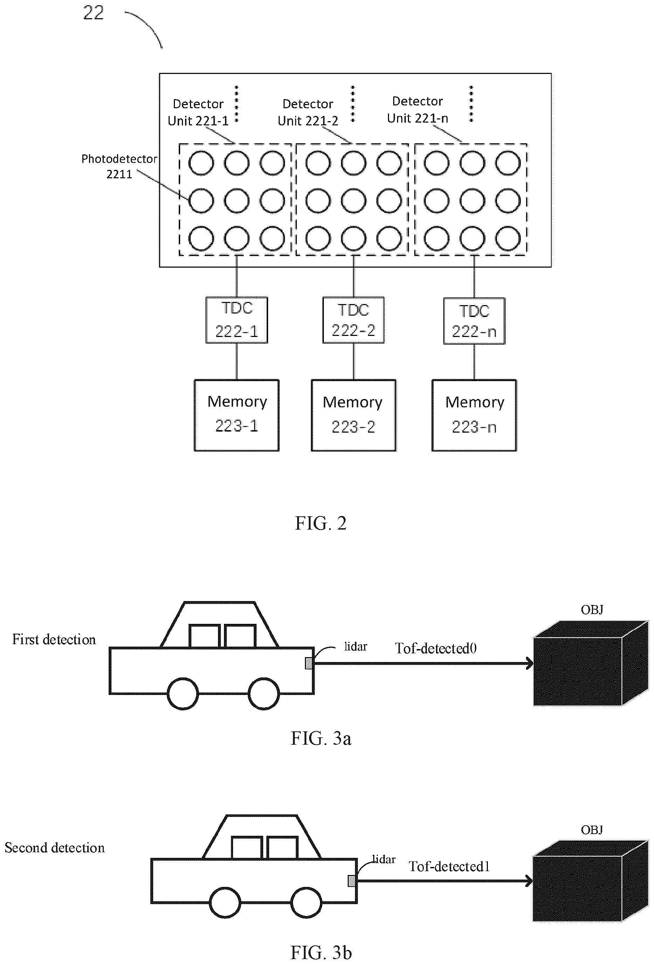

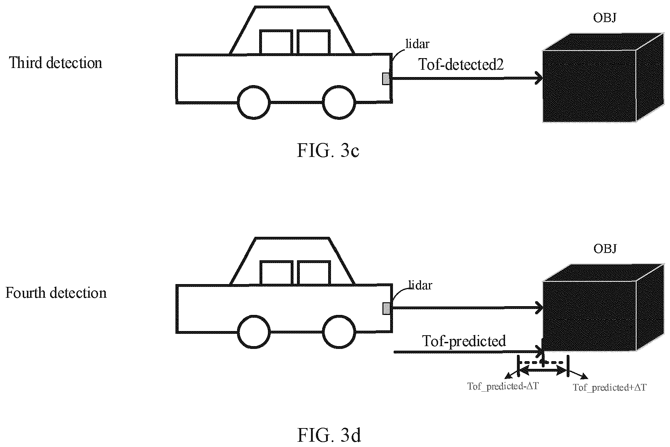

A ranging method based on a preferred embodiment of this disclosure is described in detail below, referring to FIG. 2 and FIGS. 3a-3d.

FIG. 2 shows a schematic diagram of a photoelectric detector unit based on preferred embodiments of this disclosure, in which a single-photon avalanche diode ("SPAD") is used as a photodetector. For example, referring to FIG. 2, the photoelectric detector unit 22 includes multiple detector units 221, which are 221-1, 221-2, ..., and 221-n in FIG. 2. Each detector unit 221 corresponds to, for example, one or more lasers of the transmitter unit of the LiDAR, and in other words, corresponds to one point in the point cloud obtained from the detection of the LiDAR. The photoelectric detector unit 22 further includes multiple time-to-digital converters ("TDC") 222 (222-1, 222-2, ..., and 222-n shown in the figure) and memories 223 (223-1, 223-2, ..., and 223-n). In the embodiment of FIG. 2, each detector unit 221 includes multiple (e.g., nine as shown in the figure, or four) photodetectors 2211. Taking the SPAD as an example, the output terminals of SPADs of each detector unit 221 are connected (which is not necessarily directly connected and which can be a signal that is outputted after amplification or filtering processing) to a TDC 222. The range of the detection window of each detector unit 221 is independently adjustable, that is, each detector unit 221 can be independently controlled to be in an ON state (a state in which an echo can be received) or an OFF state (a state in which no echo can be received). After an echo is incident on the detector units 221-1, 221-2, ..., and 221-n, the SPADs are triggered, and electrical signals are generated. Each detector unit 221 is coupled to a TDC 222, and the TDC 222 can determine the arrival time of the echo or can calculate a TOF of the echo and store the result in the memory 223.

In the embodiment of FIG. 2, the description is given with the SPAD as an example. It is readily understood by those skilled in the art that this disclosure is not limited thereto, and other types of photodetector 2211 can be used, including, but not limited to, an avalanche photodiode ("APD"), a silicon photomultiplier ("SiPM"), and the like. In addition, in the embodiment in FIG. 2, each detector unit 221 has a corresponding TDC 222 and a memory 223. Alternatively, the TDC 222 and the memory 223 can be reused, that is, one TDC 222 and one memory 223 correspond to multiple detector units 221, which is all within the protection scope of this disclosure.

In step S102, based on the point cloud obtained by the LiDAR, the type of the obstacle can be identified, and the speed of the obstacle can be calculated. For example, based on the position relationship of points in the point cloud and in conjunction with techniques such as artificial intelligence ("AI") identification, for example, based on the mutual relationship between multiple points in the point cloud and by object identification, those points that belong to the same obstacle can be determined, the type of the obstacle is further identified and confirmed, and the size of the obstacle can be calculated. For example, the reflectivity of multiple points can be used to assist in determining whether these points belong to the same obstacle. For example, because the reflectivity of adj acent points is typically relatively close, when the difference or the variation range of reflectivity of adjacent points exceeds a threshold, those adjacent points can be determined not to belong to the same obstacle or object.

In addition, based on the type of the obstacle, the change in the relative position of the obstacle in multiple frames of point cloud, and the time interval between respective frames of the point cloud, the speed or other motion parameters of the obstacle can be calculated. The position where the obstacle is located when the LiDAR performs the $(k + 1)^{th}$ detection (the detection for obtaining the $(k + 1)^{th}$ frame of the point cloud) is predicted based on the speed of the obstacle and the previous k frames of the detection data. Further, the detection parameter predicted for the next frame of the obstacle can be changed based on the increase or decrease in the number of the obstacles and a possible change in the distance from the obstacle. In addition, the type of the obstacle can assist in determining detection requirements. For example, the obstacle can be a tree. Such a static object is not a focus of autonomous driving, and in this case, the detection window of corresponding points can be shortened. If the obstacle is a pedestrian or a vehicle moving at a high speed, which is a dynamic object of interest, a larger detection window can be reserved for corresponding points to ensure better and more accurate detection.

Step S102 can be implemented by a controller or a signal processor unit inside the LiDAR or can be performed by an external data processor outside the LiDAR. The advantage of performing through an external data processor is that the external data processor typically has a more powerful calculation capability and a faster calculation speed. When the LiDAR is used in an autonomous vehicle, the external data processor can be an electronic control unit ("ECU").

Based on a preferred embodiment of this disclosure, in step S101, multiple (k ≥ 1) frames of the detection data of the three-dimensional environment are acquired based on the range of an original detection window, where the range of the original detection window is, for example, associated with a maximum detection distance of the LiDAR. If a required maximum detection distance is $D_{max}$ with corresponding TOF of win_$D_{max}$ and a required minimum detection distance is $D_{min}$ with corresponding TOF of win_$D_{min}$, the range of the original detection window is [win_$D_{min}$, win_$D_{max}$], where win_$D_{min} \geq 0$, and win_$D_{max}$ can be less than or equal to the TOF corresponding to an actual maximum detection distance detectable by the LiDAR.

For example, the required maximum distance detectable by the photodetector is 30 m, that is, the required maximum detection distance $D_{max}$ = 30 m; based on the equation win_$D_{max}$= $2D_{max}$/c, where c is the speed of light, the corresponding TOF win_$D_{max}$ can be calculated as 200 ns; if win_$D_{min}$ predetermined by a system is 0, the range of the original detection window is [0, 200 ns].

FIGs. 3a-3d show the process of changing the range of the detection window in step S103. Referring to FIG. 3a, the LiDAR is mounted, for example, on the front of the vehicle to detect an object in front of the vehicle. During the first detection, the TOF of the echo is Tof_detected0. Referring to FIG. 3b, during the second detection, the TOF of the echo is Tof_detected1, where Tof_detected1 is less than Tof_detected0, indicating that the LiDAR is approaching the object. Referring to FIG. 3c, during the third detection, the TOF of the echo is Tof_detected2, where Tof_detected2 is less than Tof_detected1, indicating that the LiDAR is further approaching the object.

Based on the detection data from the previous three detections, the predicted TOF of the echo during the fourth detection is Tof_predicted. For example, the moving speed and the direction of the object relative to the vehicle (the LiDAR) can be calculated based on the detection data from the previous three detections, then the position (including at least the distance and the orientation) of the object during the fourth detection can be predicted based on the time interval between the fourth detection and the third detection, and the TOF Tof_predicted corresponding to the position can be calculated. In step S 103, the central position of the corresponding detection window can be changed to Tof_predicted, and the range of the corresponding detection window is changed to [Tof_predicted - $\Delta T$, Tof_predicted + $\Delta T$], where $\Delta T$ is a time window and can be a predetermined value or can be associated with at least one of the size or the speed of the obstacle.

The value of $\Delta T$ can be set based on different conditions. Based on a preferred embodiment of this disclosure, $\Delta T$ can be predetermined to a fixed value based on experience or simulation results. Based on another preferred embodiment of this disclosure, $\Delta T$ can be determined based on the prediction for the obstacle. For example, if the moving speed of the obstacle is low (the speed is less than a threshold) and does not change abruptly, a relatively small detection window can be used, and $\Delta T$ can be set relatively small; if the predicted moving speed of the obstacle is relatively high, a relatively large detection window can be set, and $\Delta T$ can be set relatively large; if the uncertainty of the prediction for the obstacle is relatively high, that is, the moving speed of the obstacle cannot be accurately determined, a relatively large detection window can be set. Based on another preferred embodiment of this disclosure, the value of $\Delta T$ can be associated with the size of the obstacle. If the size of the obstacle is relatively large, $\Delta T$ can also be set relatively large; if the size of the obstacle is relatively small, $\Delta T$ can be set relatively small. Thus, $\Delta T$ increases as at least one of the size or the speed of the obstacle increase. The setting of $\Delta T$ can also take other factors into consideration, as long as the value of $\Delta T$ can make the obstacle (at least one detection point) appear within a predicted window in the next frame, preferably in a relatively central position of the window, and that the entire detection window does not need to be very large. These setting manners are all within the protection range of this disclosure.

Based on this disclosure, the ranging information can be calculated only based on the echo information within the changed detection window in step S 104, and this can be implemented in different manners, which is described in detail below referring to FIG. 2.

Based on an embodiment of this disclosure, during the (k + 1)th detection, the photodetector is turned on within the range of the changed detection window, and the photodetector is turned off outside the range of the changed detection window. That is, the photodetector is turned off outside the range of the detection window and does not perform detection until the current detection is completed; when the next detection is performed, the range of the detection window continues to be changed based on predicted detection result, and the corresponding photodetector is turned on or off based on the range of the detection window. Still referring to FIG. 2, when the laser corresponding to the detector unit 221-1 transmits a detection laser beam (this time point can be taken as the start time point of the detection window, or the start time point of the detection window can be earlier by a certain time length), the photodetector (SPAD) in the detector unit 221-1 is turned on only within the range of the changed detection window so that the detector unit 221-1 receives the echo only within the range of changed the detection window and converts the echo into an electrical signal, and the TDC receives the electrical signal and calculates the reception time or the TOF of the echo. Through this embodiment, the power consumption of the LiDAR can be reduced.

Based on another embodiment of this disclosure, during the (k + 1)th detection, the photodetector and the TDC are always kept on, and the memory stores only the detection data outputted by the TDC within the range of the changed detection window. Therefore, in this embodiment, the photodetector can be always on and always performs detection, the TDC is always on, and the memory stores only the detection data associated with the obstacle. Still referring to FIG. 2, when the laser corresponding to the detector unit 221-1 transmits a detection laser beam, the photodetector (SPAD) in the detector unit 221-1 is always kept on within the range of the original detection window, to convert the received optical signal an electrical signal, and the electrical signal is processed through the TDC, but the memory stores only data outputted by the TDC within the range of the changed detection window. Through this embodiment, the memory stores only the detection data associated with the obstacle. The data outside of the range of the changed detection window, that is, the detection data that significantly deviates from the predicted TOF, is not stored or processed, thereby reducing the data amount, the storage requirements and the calculation requirements. The photodetector does not need to be frequently turned on or off, thereby reducing the control complexity.

Based on another embodiment of this disclosure, during the (k + 1)th detection, the photodetector is always kept on, and the TDC is turned on only within the range of the changed detection window. That is, the photodetector can be always on and always performs detection, and the TDC is turned on only within the range of the changed detection window. Still referring to FIG. 2, when the laser corresponding to the detector unit 221-1 transmits a detection laser beam, the photodetector (SPAD) in the detector unit 221-1 is always kept on within the range of the original detection window, the received optical signal is converted into an electrical signal, and the TDC is turned on only within the range of the changed detection window. Through this embodiment, by turning off the TDC, the power consumption of the LiDAR can be reduced.

In the three embodiments described above, the photodetector is turned on within the range of the changed detection window, the memory stores only the output of the TDC within the range of the changed detection window, and the TDC is turned on within the range of the changed detection window so that only the echo information within the range of the changed detection window is obtained for the subsequent calculation of the ranging information.

If the prediction result of the (k + 1)th detection in step S103 is accurate, when the (k + 1)th detection is actually performed, the obstacle can still be tracked to calculate ranging information for the detection point on the obstacle. However, if no valid object is detected during the (k + 1)th detection (i.e., no valid echo is received) for some other reasons, that is, when no obstacle is detected within the range of the changed detection window, the range of the detection window during the (k + 2)th detection is restored to the range of the original detection window so that the LiDAR does not miss echo information during the (k + 2)th detection. If a valid object is detected during the (k + 1)th detection (i.e., a valid echo is received), steps S102, S103, and S104 can be repeated, and the range of the detection window during the (k + 2)th detection can be changed to perform detection.

Through the steps described above, the detection data of the (k + 1)th detection is predicted based on the detection data from the previous k detections, the range of the detection window during the (k + 1)th detection is then changed, the echo within the range of the detection window is processed, and the ranging information is calculated. Continuously, the detection data of the (k + 2)th detection can be predicted based on a few previous frames (e.g., the previous two frames, that is, the kth detection and the (k + 1)th detection) of the detection data, the range of the detection window during the (k + 2)th detection is then changed, the echo within the range of the detection window is processed, the ranging information is calculated, and steps S102 to S104 are repeated until the current measurement is completed.

Preferably, for an area array transceiver system, the operation of predicting a distance change can be processed through an external upper computer that has a stronger calculation capability, and the upper computer can perform prediction in combination with a module that can implement an object tracking mechanism so that the detection window can be more intelligently selected in the entire environment scenario, thereby effectively reducing the power consumption.

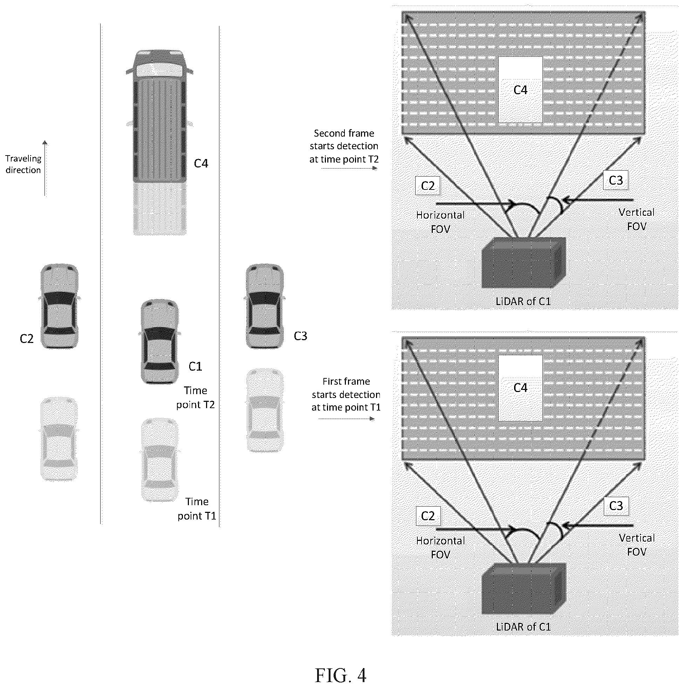

FIG. 4 is a top view of a scenario based on an embodiment of this disclosure, where C1, C2, and C3 are cars, C4 is a truck, and C4 enters the detection FOV of the LiDAR of C1 when moving forward. First, the LiDAR acquires multiple frames (e.g., three or more frames, and two frames are illustrated as an example in FIG. 4) of detection data of a three-dimensional environment and predicts, based on the previous three frames of the detection data, the position where C4 is located in the fourth frame. A relative speed of C4 relative to C1, a distance from C4, and a reflectivity of C4 can be obtained based on the previous three frames of the detection data. When the distance from C4 (or the position of C4) in the fourth frame is to be predicted, the prediction can be performed with C4 as a whole, and thus, points that belong to C4 can be identified in the previous three frames of point cloud. Based on a preferred embodiment of this disclosure, the determination can be performed based on a reflectivity difference or a distance difference between adjacent points. In one frame, the reflectivity of adjacent points belonging to the same object is usually relatively close (the reflectivity difference is less than a threshold). If the reflectivity of adjacent points changes abruptly, it can be inferred that the two points do not belong to the same object. Alternatively, the determination can also be performed based on the distance between adjacent points in the point cloud. If two adjacent points belong to the same object, the distance between the two adjacent points is relatively short (the distance is less than a threshold). If the distance between the two adjacent points changes abruptly, it can be inferred that the two points do not belong to the same object. In addition, whether adjacent points belong to the same object can also be determined in conjunction with the reflectivity and the distance of adjacent points.

In this way, the outline of C4 and the orientation (e.g., the three-dimensional coordinates of each point in the point cloud) of C4 within the FOV can be roughly determined, and the orientation of C4 within the FOV in the fourth frame is further predicted based on the relative speed of C4 relative to C1. The deviation value of the predicted orientation is affected by the detection frame rate of the LiDAR and the relative velocity relationship between C1 and C4. In the fourth frame, the range of the detection window is changed based on at least one point corresponding to C4, and detection is performed only within the distance range where the obstacle is present, thereby saving storage space, reducing calculation requirements or power consumption, and improving the signal-to-noise ratio.

The single photon avalanche diode ("SPAD") is an avalanche photo diode ("APD") that operates in a Geiger mode state and can perform single-photon detection. The specific process of photon detection is as follows. A certain reverse bias voltage Vbias is applied to an APD, the photon carrying the energy is incident on the P-N junction, and the energy is transmitted to the electron on the covalent bond so that the electron breaks from the covalent bond to form an electron-hole pair, which is also referred to as a photon-generated carrier. If the reverse bias voltage Vbias is large enough, the photon-generated carrier of the depletion layer can obtain sufficiently high kinetic energy so that the covalent bond can be broken to produce more electron-hole pairs during the impact with the lattice. This process is also referred to as impact ionization. The new carrier causes new impact ionization continuously, resulting in a chain effect and an avalanche multiplication effect of the carrier. In this way, a pulse current that is large enough to be detected is obtained, such as a pulse current in the order of mA, thereby achieving the single-photon detection. The photon detection efficiency ("PDE") is an important parameter of the SPAD and characterizes an average probability that the photon can trigger an avalanche and be detected after the photon is incident on the SPAD. The PDE can be represented by using Equation 1 below:

$$PDE = \varepsilon_{geo} * QE * \varepsilon_{trigger} \qquad \text{(Equation 1)}$$

In Equation 1, $\varepsilon_{geo}$ characterizes a geometric fill factor, QE characterizes quantum efficiency, that is, a probability that an electron-hole pair is generated, and $\varepsilon_{trigger}$ characterizes a probability that the electron-hole pair further triggers the avalanche.

In addition, PDE also characterizes the capability of the SPAD to detect a single-photon signal and can be represented as: the number of detected photons/the total number of incident photons.

To improve the signal-to-noise ratio, for a ranging apparatus that uses an array of SPADs, time-correlated single-photon counting ("TCSPC") is typically used for ranging. The basic idea of measuring time information of photon is, with the photon considered as a random event, to make statistics after repeating the measurement of the photon for multiple cycles. In other words, a photon number histogram obtained by means of multiple sweeps can be used to calculate an accurate TOF of the current TOF measurement to calculate the distance from the object and thus obtain one point in the point cloud.

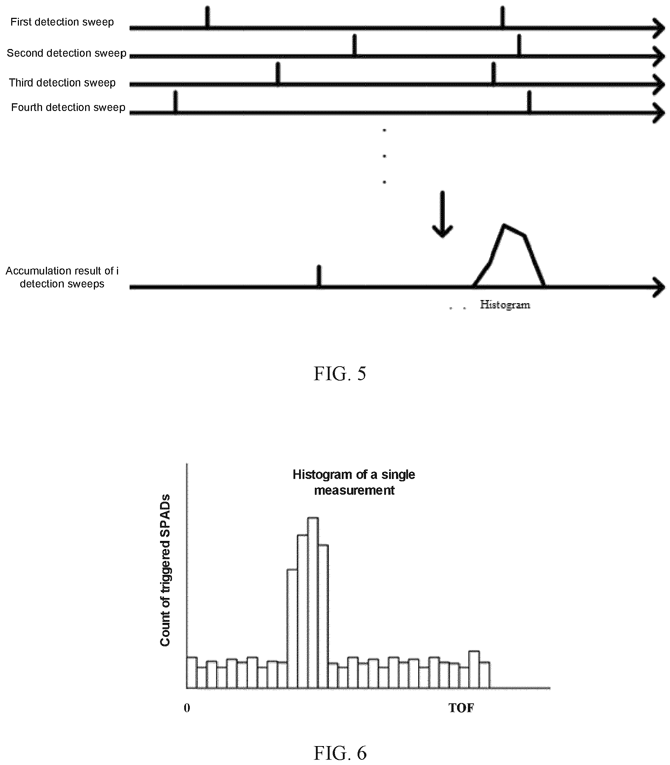

In a detection process of the LiDAR, taking a detector array formed by the SPADs as an example, because an avalanche effect can be triggered by a single photon when the SPAD operates in a Geiger mode, the SPADs can be susceptible to ambient light noise. In another aspect, the SPADs can have a relatively low PDE for a waveband of common detection light of a LiDAR, and the intensity of the signal obtained during a single detection is relatively weak. As shown in FIG. 5, for any point, during the process of one detection sweep, only several triggering (two triggering in FIG. 5) can occur within the detection time window, and whether the triggering is induced by the echo signal reflected from the object or by ambient light noise cannot be distinguished. To improve the long distance ranging capability and the signal-to-noise ratio of the LiDAR, referring to FIG. 5, in the process where the LiDAR performs one detection (or measurement) on any point of an object in the same FOV range, the LiDAR can repeatedly perform multiple detection sweeps (where the number of repeated detection sweeps can be up to 400 to 500 or can be more or less), the results of the multiple detection sweeps are accumulated to obtain a histogram, and further calculation and processing can be performed based on the histogram for ranging to obtain the distance and reflectivity information of one point in the point cloud of the LiDAR.

For each detection sweep, the controller of the LiDAR triggers a light source at the transmitting end to emit a light pulse for detection at the transmitting time point t1 and records the transmitting time point 11. The light pulse encounters an external obstacle, is reflected by the obstacle, returns to the LiDAR, and is received by the photodetector at the receiving end at the time point t2. When the photodetector is an array of SPADs, ambient light can also trigger the avalanche of the SPAD. Once the photon is received by the SPAD, an avalanche electrical signal is generated and transmitted to the TDC, and the TDC outputs a time signal of the triggering of the SPAD and a count signal of the SPADs triggered at the same time point t2 (this is the case when one pixel includes multiple SPADs; when one pixel includes only one SPAD, the count signal is not present, and the SPAD has only two states: triggered and not triggered). The memory subsequently stores a timestamp (e.g., time information represented by the horizontal axis in FIGS. 5 and 6) obtained by subtracting the transmitting time point t1 from the triggering time point t2 of the SPAD and stores the signal of the triggering count (hereinafter referred to as cnt) corresponding to the timestamp.

The triggering count cnt obtained from each detection sweep is stored in a corresponding position in the memory based on the timestamp. When a new triggering count cnt arrives in the position corresponding to a certain timestamp, the originally stored value is accumulated with the new triggering count cnt and then the result is updated to the position. The data stored in the memory after accumulation of multiple detection sweeps forms a histogram, referring to FIG. 6, and the histogram reflects the sum of triggering counts cnt corresponding to different timestamps on the time axis obtained from the multiple detection sweeps. In this way, the TOF corresponding to the echo pulse is obtained through some operations, such as calculating the center of gravity using the histogram, and then a ranging result is obtained.

Therefore, based on the embodiments described above, in one measurement of the distance or reflectivity information of each point within one FOV range, the LiDAR actually performs multiple detection sweeps (multiple transmitting-receiving cycles), where the number of sweeps can range from dozens to hundreds. Multiple sweeps are performed on any point within one FOV range in one time period, and the curve of the intensity information received by the detector at the same time information during the multiple sweeps is accumulated as the intensity information-time information curve. For example, referring to FIG. 5, in the first, second, ..., and $i^{th}$ sweeps, only a very limited number of echoes or photons are received during each sweep, but after the detection results of the i sweeps are accumulated, a histogram of the number of photons for one TOF measurement within the FOV range is obtained, referring to FIG. 6, where the scale of the abscissa is time information, and the scale width on the time axis is typically equal to the resolution of the TDC in the LiDAR, that is, the resolution of the detection time of the LiDAR.

In the context of this disclosure, "measurement" (or "detection") is distinguished from "detection sweep" (or "sweep"). Specifically, one "measurement" corresponds to a TOF measurement within a certain FOV range in one detection period (i.e., a period in which one frame of the point cloud is generated) of the LiDAR to generate one or more "points" (one or more columns of points or a bunch of points) in one frame of point cloud map, and after measurements within all of the FOV ranges are completed, one complete frame of the point cloud is obtained. The "detection sweep" refers to the process where the laser in one detection channel completes one transmission and the detector completes the corresponding reception during one measurement. One "measurement" can include one "detection sweep" or can include multiple "detection sweeps" for the same object point, such as hundreds of detection sweeps.

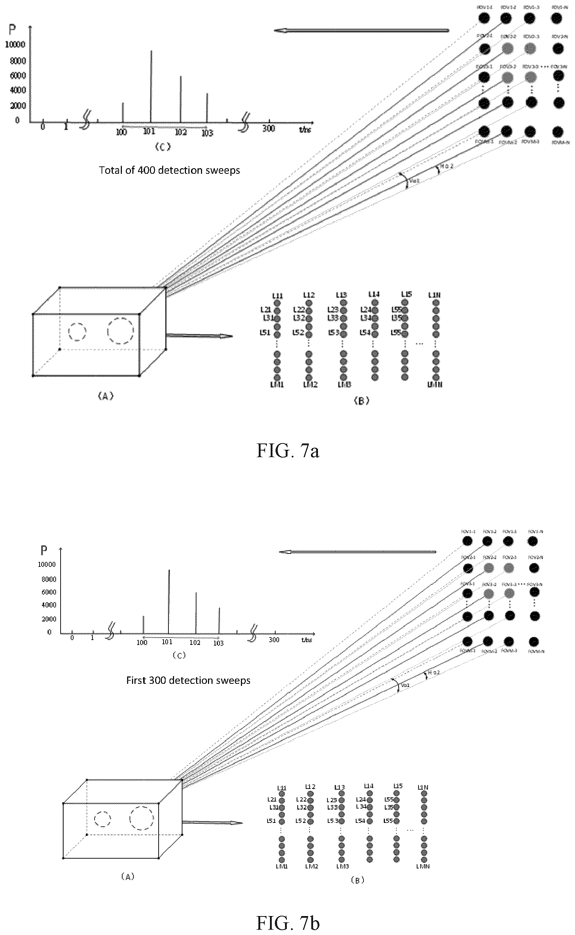

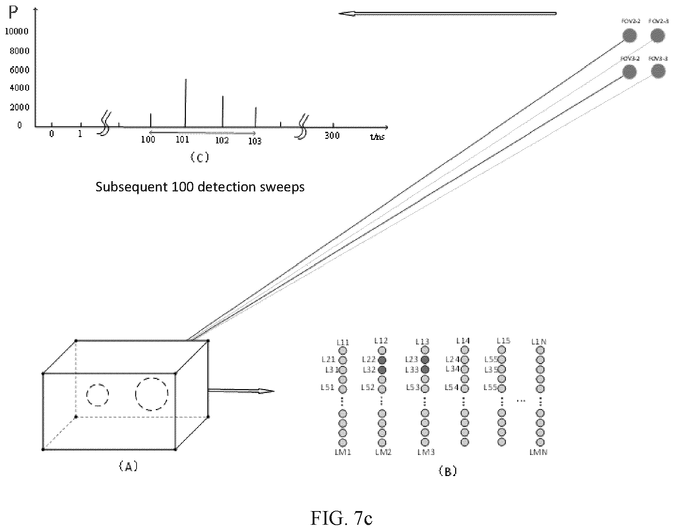

Preferably, to further improve the signal-to-noise ratio, in one "measurement" (including m detection sweeps, m = x + y) for any point, the lasers corresponding to the full FOV can be activated during the first x detection sweeps, and only the lasers corresponding to the FOV where an obstacle is present are activated during the subsequent y detection sweeps, referring to FIGS. 7. FIG. 7a shows a total of m detection sweeps (e.g., 400 detection sweeps), FIG. 7b shows that the lasers corresponding to the full FOV are activated during the first x detection sweeps (e.g., 300 detection sweeps), where an obstacle is present within the FOV range corresponding to green dots, and FIG. 7c shows that only the lasers corresponding to the green dots are activated during the subsequent y detection sweeps (e.g., 100 detection sweeps).

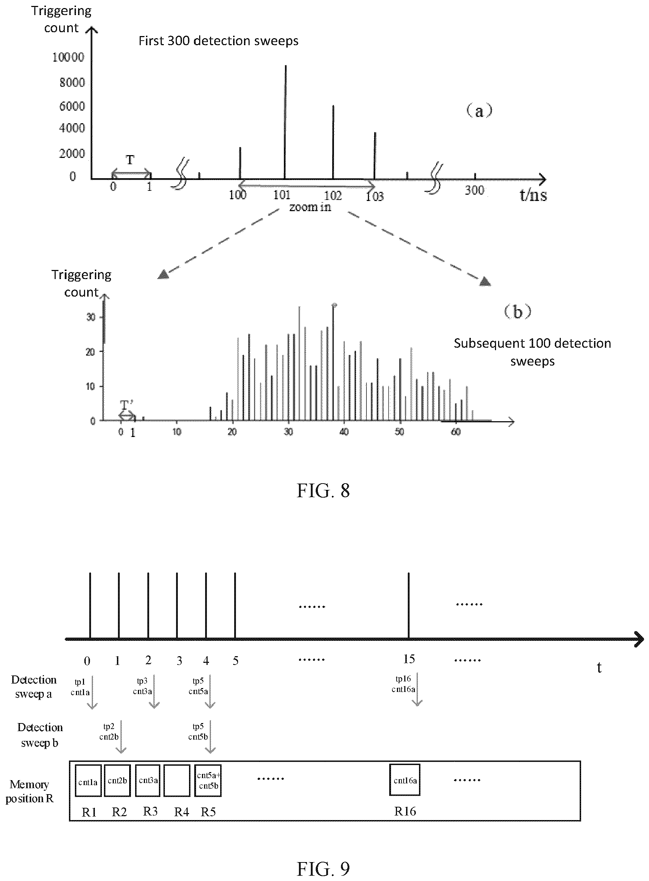

Similarly, multiple detection sweeps are repeatedly performed for the detection of one point in each frame of the point cloud. For the detection of one point, data of the obstacle can be stored only in a fine manner, the original signal is compressed while the waveform of the original signal is preserved, less storage space is used, and the ranging capability with higher precision is obtained. Referring to FIG. 8, the first 300 detection sweeps are performed within an original detection window to obtain a first set of detection data; then, the subsequent 100 detection sweeps are performed within a detection window range where the obstacle is present to obtain the second set of detection data. The first set of detection data is stored in a rough manner, and the second set of detection data is stored in a fine manner.

For the data obtained from the multiple detection sweeps repeatedly performed, the data processing method and the storage method used are specifically described as follows.

Through the detector module of photoelectric detector units 22 shown in FIG. 2, for one detection sweep, the controller of the LiDAR gates part (one row, one column or any shape of interest) of detector units 221 by supplying a high voltage to the SPADs and then sends a synchronization signal to inform the lasers at the transmitting end that they can emit light; the lasers at the transmitting end emit a light pulse for detection at the time point $t_a$ ($a$ represents the $a^{th}$ detection sweep); the light pulse encounters an external obstacle, is reflected by the obstacle, returns to the LiDAR, and can be received by the photodetector at the receiving end. When the photodetector is a SPAD array, once the photon is received by the SPAD, an avalanche electrical signal is generated and transmitted to the TDC, and the TDC outputs a time signal $t_{1a}$ of the triggering of the SPAD and a count signal $cnt_{1a}$ of the SPADs triggered at the same time point (here $1a$ represents the first triggering of the $a^{th}$ detection sweep). The triggering time point timestamp$_{1a}$ (hereinafter referred to as tp$_{1a}$) of $t_{1a} - t_a$ is calculated by the subtraction program, and the tp$_{1a}$ and the count signal $cnt_{1a}$ of SPADs triggered at the triggering time point are transmitted to and stored in the memory. One detector unit 221 includes multiple SPADs, and the SPAD can perform detection again after the dead time. Therefore, during one detection sweep, the SPAD can be triggered again at another time point, and the memory stores tp$_{2a}$ and $cnt_{2a}$ of this triggering ($2a$ represents the second triggering of the $a^{th}$ detection sweep). Multiple triggering in one detection sweep need to be stored based on time information.

During the next detection sweep b, the controller of the LiDAR transmits a signal again based on a predetermined program to control the transmitting end to transmit a detection light pulse at the time point $t_b$. Once the photon is received by the SPAD, an avalanche electrical signal is transmitted to the TDC, and the TDC outputs a time signal $t_{1b}$ of the triggering of the SPAD and a count signal $cnt_{1b}$ of the SPADs triggered at the same time point (here 1b represents the first triggering of the $b^{th}$ detection sweep). Subsequently, the triggering time point timestamp$_{1b}$ (hereinafter referred to as tp$_{1b}$) of the SPAD triggering time $t_{1b} - t_b$ and the count signal $cnt_{1b}$ of SPADs triggered at the triggering time point are stored in the memory. One detector unit 221 includes multiple SPADs, and the SPAD can perform detection again after the dead time. Therefore, during one detection sweep, the SPAD can be triggered again at another time point, and the memory stores tp$_{2b}$ and $cnt_{2b}$ of this triggering.

During the hundreds of detection sweeps, the triggering count cnt obtained from each detection sweep is stored at the corresponding position in the memory based on the triggering time point timestamp. When a new triggering count cnt arrives at the corresponding position of the same triggering time point timestamp, the originally stored value is accumulated with the new triggering count cnt and then the result is updated and stored to the position. After the results of the n detection sweeps are accumulated, a histogram is stored in the memory, and still referring to FIG. 6, the histogram reflects the sum of the triggering counts cnt corresponding to different triggering time point timestamp on the time axis. In this way, the time information corresponding to the echo is obtained through the operations of calculating the center of gravity or the leading-edge time using the histogram and taken as the time of flight for distance calculation, and one point in the point cloud can be generated.

In the data storage method shown in FIG. 9, the abscissa is the time t, the scale interval of the abscissa is the time resolution of the TDC, and each time scale corresponds to one storage position R (register). For example, during a certain detection sweep $a$, a SPAD triggering occurs at the time scale 0, a triggering time point tpi (triggering time - transmission time of current detection sweep) and triggering count information $cnt_{1a}$ are calculated based on the transmission time and the triggering time transmitted by the TDC, and the triggering count information $cnt_{1a}$ is stored in the storage position R1 corresponding to the time point tpi. A SPAD triggering occurs at the time scale 4, the time information tps and $cnt_{5a}$ are obtained, and $cnt_{5a}$ is stored in the storage position R5 corresponding to tps. During another detection sweep b, a SPAD triggering also occurs at the time scale 4, the time information tps and $cnt_{5b}$ are obtained, and $cnt_{5b}$ also corresponds to the storage position R5. At this time, $cnt_{5a}$ is read out, and the sum of $cnt_{5b}$ and $cnt_{5a}$ is updated to R5. *a* represents the $a^{th}$ detection sweep, *b* represents the $b^{th}$ detection sweep, and the numeral represents a corresponding time scale and a corresponding storage position; the storage position R is in one-to-one correspondence with the time scale, the memory stores only the triggering count cnt, and the data processor circuit can obtain the time corresponding to the triggering count cnt based on the storage position when reading data.

Referring to FIGS. 6 and 9, one histogram is obtained by accumulating the data of multiple detection sweeps (400 to 500 detection sweeps), and in the process of obtaining a histogram from the accumulation of results of hundreds of detection sweeps and obtaining a point in the point cloud, the storage position corresponding to a certain time scale stores the accumulated sum of the counts cnt of all triggering occurring at the time point. Although the SPAD triggering does not occur at each time scale during a single sweep, for example, referring to FIG. 5, the histogram data is generated from the accumulation of results of multiple detection sweeps, and at each time scale, there can be a SPAD triggering occurring during a certain sweep so that the memory receives corresponding data. Therefore, for a TDC, each time scale requires one corresponding storage position, and all the triggering counts cnt obtained from multiple detection sweeps are stored in the storage position corresponding to the time point. Because the time interval of tp, that is, the resolution of the TDC, can be in the order of picosecond ("ps"), a register with a great deal of storage space is required.

With such storage and ranging method, because the precision unit of the triggering time point timestamp is in the order of ps, when a long TOF detection is performed, the storage of a complete histogram requires a large memory and consumes a great deal of storage space. In particular, to improve the long distance ranging capability, the time length of the measurement and the number of repeated detection sweeps need to be increased, and the requirement for the storage space is also increased.

Based on an embodiment of this disclosure, the data storage method with weighted accumulation is used to compress the original signal while the ranging precision is preserved, thereby greatly reducing the storage space required for storing the histogram. After the approximate range of the object is determined, by means of the measurement using a "zooming-in" operation, the calculation amount required for generating a histogram can be reduced while keeping track of the object, thereby reducing the power consumption of the system.

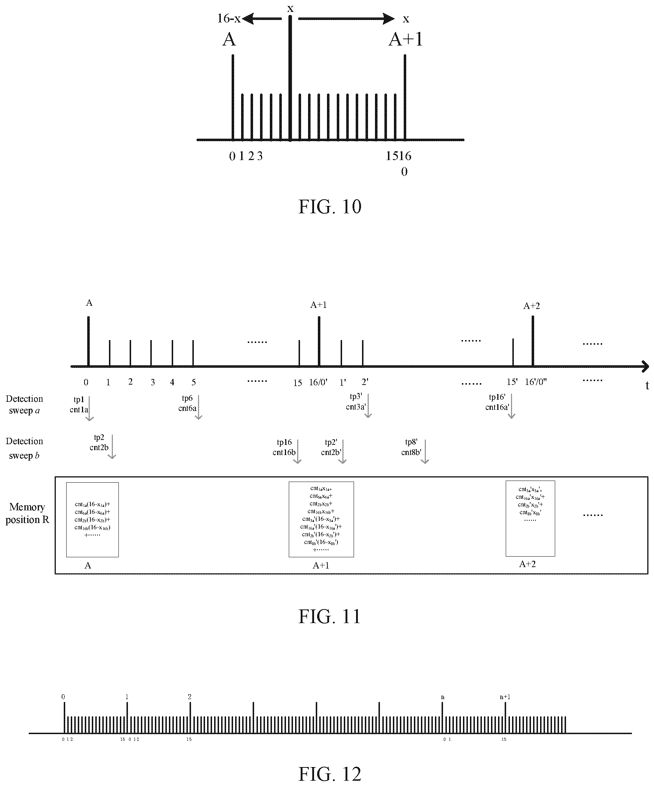

In FIG. 10, the abscissa is the time of flight, and the interval of the time scale of the abscissa is, for example, the time resolution of the LiDAR, for example, the time resolution of the TDC, which can be in the order of ps. Still referring to FIG. 10, a first time scale is set on the basis of the time resolution of the LiDAR. Referring to A and A+ 1 in FIG. 10, the interval between two adjacent first time scales crosses 16 intervals of the time resolution of the LiDAR. When the photon is detected at the time point x (e.g., one or more SPADs in one detector unit 221 of the receiver unit 22 shown in FIG. 4 are triggered), the detected intensity value is stored based on the weight of the time point x. The time point x means that the time interval between the time point and the adjacent first time scale A to the left of the time point is x times the time resolution.

It is readily appreciated by those skilled in the art that because the time resolution of the LiDAR is small and the interval of the first time scale is relatively large, the time scale corresponding to the time resolution of the LiDAR can also be referred to as a "fine scale", and the first time scale can also be referred to as a "rough scale".

Still referring to FIG. 10, the weight of the time point x includes a first weight and a second weight, the first weight is associated with a time interval between the time point x and one of adjacent first time scales, and the second weight is associated with a time interval between the time point x and the other one of adjacent first time scales. After the first weight and the second weight are determined, the intensity information is stored based on the first weight and the second weight, respectively, at the first time precision.

Based on a preferred embodiment of this disclosure, the first weight is associated with a time interval between the time point x and the adjacent first time scale A to the left of the time point x, and the first weight, for example, is (16 - x); the second weight is associated with a time interval between the time point x and the adjacent first time scale A+1 to the right of the time point x, and the second weight, for example, is x. Therefore, the time point x is represented as its weights at two adjacent rough scales (A and A+1) instead, where the weight of x on the rough scale A is (16 - x), and the weight on the rough scale A+1 is x (x characterizes the distance from the time point to A), as an equivalent to the fine scale of the time point x. In other words, by taking x as a weight, the data at the fine scale is stored on the addresses corresponding to the two adjacent rough scales to represent the value at the scale x, instead of storing the scale x itself. This process is represented by the following equation:

$$A * (16 - x) + (A + 1) * x = A * 16 + x \qquad \text{(Equation 2)}$$

In the Equation 2, the left on the equal sign is the sum of the starting value and the ending value of the rough scale stored using the rough scale, weights are applied to the starting value and the ending value, and the right of the equal sign is the specific value of the triggering time point. The specific value of the triggering time point can be represented by using the storage method of rough scale in combination with weight.

Similarly, when the signal obtained from the triggering further includes, in addition to the triggering time point, the triggering count cnt indicating the number or the intensity of the triggering, the newly-added intensity information at the rough scale A is cnt*(16 - x), and the newly-added intensity information at the rough scale A+1 is cnt*x, which are accumulated during multiple sweeps, respectively. A detailed description is given below, for example, referring to FIG. 11. The fine scale represents the time resolution of the TDC. For a certain triggering time point timestamp, the starting value of its rough scale is A, and its fine scale is at the scale x on the corresponding 0-15 fine scale plate in its rough scale.

Still referring to FIG. 11, one register is assigned to each rough scale, the interval between the rough scales of the abscissa is 16 times the resolution of the TDC, and each rough scale corresponds to one register. During a certain sweep $a$, a SPAD triggering occurs at the time scale 0, the time information tpi (corresponding to $x_{1a} = 0$) and the triggering count information $cnt_{1a}$ are obtained, $cnt_{1a}*(16 - x_{1a})$ is stored in the register A corresponding to the rough scale A, and $cnt_{1a}*x_{1a}$ is stored in the register A+1 corresponding to the rough scale A+1; at another time scale 5, the time information $tp_6$ (corresponding $x_{6a} = 5$) and the triggering count information $cnt_{6a}$ are obtained, and the data stored in the register A corresponding to the rough scale A is read out, added with $cnt_{6a}*(16 - x_{6a})$ and the sum is then stored in the register A; the data in the register A+1 corresponding to the rough scale A+1 is read out, added with $cnt_{6a}*x_{6a}$ and the sum is then restored in the register A+1. Within one rough scale time period (fine scale 0~16), all the triggering count information cnt is applied with weights, added with the original data and the sums are stored in the registers corresponding to the storage positions A and A+1. The triggering count information cnt within the next rough scale time period is applied with weights and then stored in the registers corresponding to the rough scales A+1 and A+2. For example, when the SPAD triggering occurs at the time point 2', the time information $tp_3'$ and $cnt_{3a}'$ are obtained, the data stored in the register A+1 corresponding to the rough scale A+1 is added with $cnt_{3a}'*(16 - x_{3a}')$, and $cnt_{3a}' * x_{3a}'$ is stored in the register A+2 corresponding to the rough scale A+2.

During the next sweep b, the signals $tp_2$ and $cnt_{2b}$ are received, weights for the rough scales A and A+1 are applied respectively to obtain $cnt_{2b}* (16 - x_{2b})$ and $cnt_{2b}*x_{2b}$, which are added with the originally stored data respectively and then the sums are respectively stored in the registers corresponding to the rough scales A and A+1. The histogram is obtained by accumulating the data of multiple sweeps, and during the multiple sweeps, the triggering counts cnt of all the triggering occurring at the time points 0~15 are stored in the registers corresponding to the rough scales A and A+1.

The comparison between the rough scale and the fine scale is shown in FIG. 12. With respect to the scheme in which one register is required for data storage at each fine scale, in embodiments of this disclosure, a data storage method with weighted accumulation is used, and the registers only need to be set corresponding to the rough scale of 0~n+1, and the number of registers required is reduced to 1/16 of the original number. Although the bit width nf each register for storage is increased and the occupied space is increased, the total storage space can be reduced to 1/10 of the original storage space through the data storage method with weighted accumulation because the storage positions to be assigned are greatly reduced.

In the embodiments of FIGS. 10 and 11, the time interval of adjacent first time scales (rough scales) is 16 times the time resolution (fine scale) of the detection data of the LiDAR, that is, data is compressed using 16 as a weight. It is readily appreciated by those skilled in the art that this disclosure is not limited thereto, and the weight here can be any positive integer, preferably 2m, where m is a positive integer, thereby facilitating implementation in a field-programmable gate array ("FPGA") or an application-specific integrated circuit ("ASIC").

In the above-mentioned embodiments, the first weight is (16 - x), the second weight is x, and this disclosure is not limited thereto. The first weight can be x, the second weight is (16 - x); or the first weight can be 1- (x/n), and the second weight is x/n, as long as the first weight is associated with a time interval between the time point x and one of adjacent first time scales, and the second weight is associated with a time interval between the time point x and the other one of adjacent first time scales.

The storage method shown in FIGS. 9 to 11 can be applied to the storage of the first set of detection data and the second set of detection data in the above-mentioned data processing method.

Based on a preferred embodiment of this disclosure, the first set of detection data and the second set of detection data are stored in a first storage manner or a second storage manner. Specifically, the first storage manner includes storage at a first time precision (i.e., the precision corresponding to the rough scale in FIG. 10) based on the weight of the time information, where the first time precision can be a multiple of the time resolution of the LiDAR, for example, m times, and m is an integer greater than 1. Within a certain range, the smaller the value of m is, the higher the precision of the detection result is, and thus the calculation amount and storage space required are large. The second storage manner includes storage based on the time resolution of the LiDAR (i.e., the fine scale in FIG. 12). The time resolution of the LiDAR, that is, the time resolution of the TDC, is a minimum time interval that can be identified when the TDC operates. In other words, a period of time to be measured is represented by using a reference signal with a relatively small time interval. The time interval of the reference signal is a measurement precision, and the smaller the value of time interval of the reference signal is, the higher the time resolution of the TDC is.

Because the first storage manner is performed at the first time precision, the second storage manner is performed at the second time precision, and the first time precision is lower than the second time precision, the storage space used in the first storage manner is less than the storage space used in the second storage manner.

Based on a preferred embodiment of this disclosure, the first set of detection data is stored in the first storage manner, and the second set of detection data is stored in the second storage manner. Because less storage space is used in the first storage manner than in the second storage manner, the data volume of the first set of detection data is less, the calculation amount is fewer, and the position of the object obtained based on the first set of detection data is rougher.

Based on a preferred embodiment of this disclosure, the first storage manner also involves a weight. The weight includes a first weight and a second weight, the first weight is associated with a time interval between the time information and one of adjacent first time scales, and the second weight is associated with a time interval between the time information and the other one of adjacent first time scales.

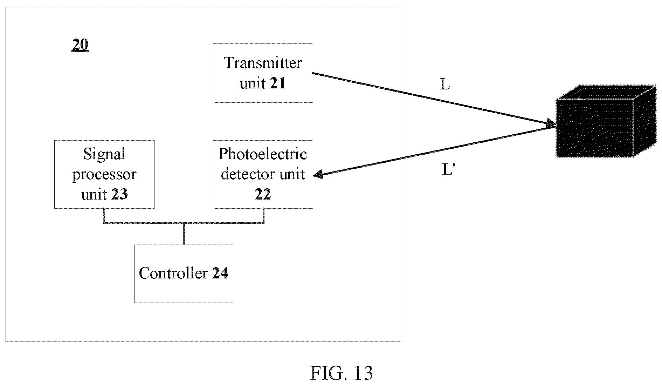

This disclosure further provides a LiDAR 20. Referring to FIG. 13, the LiDAR 20 includes a transmitter unit 21, a photoelectric detector unit 22, a signal processor unit 23, and a controller 24. The transmitter unit 21 is configured to transmit a detection laser beam for detecting a three-dimensional environment. The structure of the photoelectric detector unit 22 is, for example, shown in FIG. 4, and the photoelectric detector unit 22 includes multiple photodetectors 2211 and is configured to receive an echo from an obstacle and convert the echo into an electrical signal. The signal processor unit 23 is coupled to the photoelectric detector unit 22 to receive the electrical signal and calculate the ranging information of the obstacle based on the electrical signal. The controller 24 is coupled to the photoelectric detector unit 22 and the signal processor unit 23 and is configured to perform the following operations:

 acquiring multiple frames of detection data of the three-dimensional environment;

 predicting, based on at least part of the previous k frames of the detection data, a position where an obstacle is located in the three-dimensional environment during the $(k + 1)^{th}$ detection, where k is an integer, and $k \geq 1$; and when performing the $(k + 1)^{th}$ detection, changing, based on the predicted position information of the obstacle, the range of a detection window for at least one point on the obstacle.

The signal processor unit 23 is configured to, when performing the $(k + 1)^{th}$ detection, calculate ranging information of the at least one point on the obstacle only based on echo information within the range of the changed detection window.

Based on a preferred embodiment of this disclosure, the detection data includes at least one of a relative orientation or a distance from the LiDAR 20, and the operation of acquiring multiple frames of detection data of the three-dimensional environment includes: acquiring, based on the range of an original detection window, k frames of the detection data of the three-dimensional environment, where the range of the original detection window is associated with a predetermined maximum detection distance of the LiDAR.

Based on a preferred embodiment of this disclosure, the controller 24 is configured to predict the position where the obstacle is located during the $(k + 1)^{th}$ detection in the following manner:

 identifying the type of the obstacle;

 calculating a speed of the obstacle based on the type of the obstacle and the previous k frames of the detection data; and

 predicting, based on the speed of the obstacle, the position where the obstacle is located during the $(k + 1)^{th}$ detection.

Based on a preferred embodiment of this disclosure, the controller 24 is configured to determine at least one of the size or the motion parameter of the obstacle based on the mutual correlation between multiple points in the detection data in conjunction with an object identification technique.

Based on a preferred embodiment of this disclosure, k > 1, and the controller 24 is configured to predict the distance of the obstacle during the $(k + 1)^{th}$ detection in the following manner:

predicting, based on a relative position change of the obstacle during the previous k detections and a time interval between adjacent detections, the position where the obstacle is located during the $(k + 1)^{th}$ detection.

Based on a preferred embodiment of this disclosure, the controller 24 is configured to change the range and the position of the detection window during the $(k + 1)^{th}$ detection in the following manner:

 obtaining, based on the predicted position information of the obstacle, corresponding predicted TOF for any point on the obstacle;

 changing a central position of the corresponding detection window to the predicted TOF; and

changing the range of the corresponding detection window to [predicted TOF - time window, predicted TOF + time window], where the time window is a predetermined value or is associated with at least one of the size or the speed of the obstacle.

Based on a preferred embodiment of this disclosure, the time window increases as at least one of the size or the speed of the obstacle increase.

Based on a preferred embodiment of this disclosure, the LiDAR further includes a TDC 222 and a memory 223. The TDC is configured to receive the electrical signal and output TOF of the echo, and the memory is configured to store the TOF of the echo.

During the $(k + 1)^{th}$ detection, the photodetector 2211 is turned on within the range of the changed detection window, and the photodetector 2211 is turned off outside the range of the changed detection window. That is, the photodetector 2211 is turned off outside the range of the detection window and does not perform detection until the current detection is completed; when the next detection is performed, the range of the detection window continues to be changed based on the predicted detection result, and the corresponding photodetector 2211 is turned on or off based on the range of the detection window. Still referring to FIG. 4, when the laser corresponding to the detector unit 221-1 transmits a detection laser beam, the photodetector is turned on only within the range of the changed detection window so that the photodetector 2211 (SPAD) in the detector unit 2211-1 receives the echo only within the range of the changed detection window and converts the echo into an electrical signal, and the TDC 222 receives the electrical signal and calculates the reception time or the TOF of the echo. Through this embodiment, the power consumption of the LiDAR can be reduced theoretically.

During the $(k + 1)^{th}$ detection, the photodetector 2211 and the TDC 222 are always kept on, and the memory 223 stores only the detection data outputted by the TDC 222 within the range of the changed detection window, i.e., TOF of the echo generated by the detection laser beam reflected by the obstacle. That is, the photodetector 2211 can be always on and always performs detection, the TDC 222 is always on, and the memory 223 stores only the detection data associated with the obstacle. Still referring to FIG. 4, when the laser corresponding to the detector unit 221 transmits a detection laser beam, the photodetector 2211 (SPAD) in the detector unit 221 is always kept on within the range of the original detection window, the received optical signal is converted into an electrical signal and processed through the TDC 222, and the memory 223 stores only data outputted by the TDC 222 within the range of the changed detection window. Through this embodiment, the memory 223 stores only the detection data associated with the obstacle. The data outside of the range of the changed detection window, that is, the detection data that excessively deviates from the predicted TOF, is not stored or processed, thereby reducing the data volume, the storage requirements and the calculation requirements. The photodetector 2211 does not need to be frequently turned on or off, thereby reducing the control complexity.

Based on another embodiment of this disclosure, during the $(k + 1)^{th}$ detection, the photodetector 2211 is always kept on, and the TDC 222 is turned on only within the range of the changed detection window. That is, the photodetector 2211 can be always on and always performs detection, and the TDC 222 is turned on only within the range of the changed detection window. Still referring to FIG. 4, when the laser corresponding to the detector unit 221 transmits a detection laser beam, the photodetector 2211 (SPAD) in the detector unit 221 is always kept on within the range of the original detection window, the received optical signal is converted into an electrical signal, and the TDC 222 is turned on only within the range of the changed detection window. Through this embodiment, the TDC 222 can be turned off, and the power consumption of the LiDAR can be reduced.

In the three embodiments described above, the photodetector 2211 is turned on within the range of the changed detection window, the memory 223 stores only the TOF of the echo outputted by the TDC 222 within the range of the changed detection window, and the TDC 222 is turned on within the range of the changed detection window, so that only the echo information within the range of the changed detection window is obtained for the subsequent calculation of the ranging information.

Based on a preferred embodiment of this disclosure, the controller 24 is configured to, when no obstacle is detected within the range of the changed detection window during the $(k + 1)^{th}$ detection, change the range of the detection window during the $(k + 2)^{th}$ detection to the range of the original detection window.

By changing the range of the detection window to limit the detection data that is to be processed subsequently, the unnecessary calculation amount can be reduced, or by turning off part of the photodetector 2211 or the TDC 222 outside the range of the detection window, the power consumption of the LiDAR 20 can be reduced.

This disclosure further provides a computer-readable storage medium including computer-executable instructions stored thereon, where the computer-executable instructions, when executed by a processor, perform the ranging method described above.

Finally, it is to be noted that the above are merely preferred embodiments of this disclosure and are not intended to limit this disclosure. Although the embodiments of this disclosure are described in detail with reference to the above-mentioned embodiments, those skilled in the art can still modify the technical schemes described in the above-mentioned embodiments, or make equivalent substitutions on part of the technical features therein. Any modifications, equivalent substitutions, improvements and the like within the spirit and principle of this disclosure shall fall within the scope of protection of this disclosure.

**Claims**

1.  A ranging method for a LiDAR, comprising:

    S101: acquiring multiple frames of detection data of a three-dimensional environment;
    S102: predicting, based on at least part of previous k frames of the detection data, a position where an obstacle is located in the three-dimensional environment during a $(k + 1)^{th}$ detection, wherein k is an integer, and $k \geq 1$;
    S103: when performing the $(k + 1)^{th}$ detection, changing, based on predicted position information of the obstacle, a range of a detection window for at least one point on the obstacle; and
    S104: calculating ranging information of the at least one point only based on echo information within the changed detection window.

2.  The ranging method of claim 1, wherein the detection data comprises at least one of a relative orientation or a distance from the LiDAR, and the step S101 comprises: acquiring, based on a range of an original detection window, k frames of the detection data of the three-dimensional environment, wherein the range of the original detection window is associated with a predetermined maximum detection distance of the LiDAR.

3.  The ranging method of claim 1, wherein the step S102 comprises:

    identifying a type of the obstacle;
    calculating a speed of the obstacle based on the type of the obstacle and the previous k frames of the detection data; and
    predicting, based on the speed of the obstacle, the position where the obstacle is located during the $(k + 1)^{th}$ detection.

4.  The ranging method of claim 3, wherein the step S102 further comprises: determining at least one of a size or a motion parameter of the obstacle based on a mutual correlation between multiple points in the detection data in conjunction with an object identification technique.

5.  The ranging method of claim 1, wherein k > 1, and the step S102 comprises:
    predicting, based on a relative position change of the obstacle during previous k detections and a time interval between adjacent detections, the position where the obstacle is located during the $(k + 1)^{th}$ detection.

6.  The ranging method of any one of claims 1 to 5, wherein the step S103 comprises:

    obtaining, based on the predicted position information of the obstacle, corresponding predicted TOF for any point on the obstacle; and
    changing a central position of the corresponding detection window to the predicted TOF, and changing the range of the corresponding detection window to [predicted TOF - time window, predicted TOF + time window], wherein the time window is a predetermined value or is associated with at least one of the size or the speed of the obstacle.

7.  The ranging method of claim 6, wherein the time window increases as at least one of the size or the speed of the obstacle increase.

8.  The ranging method of claim 7, wherein the LiDAR comprises a receiver unit, wherein the receiver unit comprises a photodetector, a time-to-digital converter, and a memory, the photodetector is configured to receive an echo and convert the echo into an electrical signal, the time-to-digital converter is configured to receive the electrical signal and output TOF of the echo, and the memory is configured to store the TOF of the echo; the step S104 further comprises:

    during the $(k + 1)^{th}$ detection, turning on the photodetector of the LiDAR within the range of the changed detection window, and turning off the photodetector outside the range of the changed detection window; or

16

during the $(k + 1)^{th}$ detection, always keeping the photodetector and the time-to-digital converter on, and storing, by the memory, only the TOF of the echo outputted by the time-to-digital converter within the range of the changed detection window; or

during the $(k + 1)^{th}$ detection, always keeping the photodetector on, and turning on the time-to-digital converter only within the range of the changed detection window.

9. The ranging method of claim 1, further comprising:

S105: when no obstacle is detected within the range of the changed detection window during the $(k + 1)^{th}$ detection, changing the range of the detection window during a $(k + 2)^{th}$ detection to a range of an original detection window.

10. A LiDAR, comprising:

a transmitter unit, configured to transmit a detection laser beam for detecting a three-dimensional environment;

a photoelectric detector unit, comprising multiple photodetectors and configured to receive an echo from an obstacle and convert the echo into an electrical signal;

a signal processor unit, coupled to the photoelectric detector unit to receive the electrical signal and calculate ranging information of the obstacle based on the electrical signal; and

a controller, coupled to the photoelectric detector unit and the signal processor unit and configured to perform the following operations:

acquiring multiple frames of detection data of the three-dimensional environment;

predicting, based on at least part of previous k frames of the detection data, a position where the obstacle is located in the three-dimensional environment during a $(k + 1)^{th}$ detection, wherein k is an integer, and k $\geq$ 1; and

when performing the $(k + 1)^{th}$ detection, changing, based on predicted position information of the obstacle, a range of a detection window for at least one point on the obstacle;

wherein the signal processor unit is configured to, when performing the $(k + 1)^{th}$ detection, calculate ranging information of the at least one point on the obstacle only based on echo information within the range of the changed detection window.

11. The LiDAR of claim 10, wherein the detection data comprises at least one of a relative orientation or a distance from the LiDAR, and the operation of acquiring multiple frames of detection data of the three-dimensional environment comprises: acquiring, based on a range of an original detection window, k frames of the detection data of the three-dimensional environment, wherein the range of the original detection window is associated with a predetermined maximum detection distance of the LiDAR.

12. The LiDAR of claim 11, wherein the controller is configured to predict the position where the obstacle is located during the $(k + 1)^{th}$ detection in the following manner:

identifying a type of the obstacle;

calculating a speed of the obstacle based on the type of the obstacle and the previous k frames of the detection data; and

predicting, based on the speed of the obstacle, the position where the obstacle is located during the $(k + 1)^{th}$ detection.

13. The LiDAR of claim 12, wherein the controller is configured to determine at least one of a size or a motion parameter of the obstacle based on a mutual correlation between multiple points in the detection data in conjunction with an object identification technique.

14. The LiDAR of claim 10, wherein k > 1, and the controller is configured to predict a distance from the obstacle during the $(k + 1)^{th}$ detection in the following manner:

predicting, based on a relative position change of the obstacle during previous k detections and a time interval between adjacent detections, the position where the obstacle is located during the $(k + 1)^{th}$ detection.

15. The LiDAR of any one of claims 10 to 14, wherein the controller is configured to change the range and a position of the detection window during the $(k + 1)^{th}$ detection in the following manner:

obtaining, based on the predicted position information of the obstacle, corresponding predicted TOF for any point on the obstacle;

changing a central position of the corresponding detection window to the predicted TOF; and

changing the range of the corresponding detection window to [predicted TOF - time window, predicted TOF + time window], wherein the time window is a predetermined value or is associated with at least one of the size or the speed of the obstacle.

16. The LiDAR of claim 15, wherein the time window increases as at least one of the size or the speed of the obstacle increase.

17. The LiDAR of claim 16, wherein the LiDAR further comprises a time-to-digital converter and a memory, the time-to-digital converter is configured to receive the electrical signal and output TOF of the echo, and the memory is configured to store the TOF of the echo;

wherein during the $(k + 1)^{th}$ detection, the photodetector of the LiDAR is turned on within the range of the changed detection window, and the photodetector is turned off outside the range of the changed detection window; or

during the $(k + 1)^{th}$ detection, the photodetector and the time-to-digital converter are always kept on, and the memory stores only the TOF of the echo outputted by the time-to-digital converter within the range of the changed detection window; or

during the $(k + 1)^{th}$ detection, the photodetector is always kept on, and the time-to-digital converter is turned on only within the range of the changed detection window.

18. The LiDAR of claim 10, wherein the controller is configured to, when no obstacle is detected within the range of the changed detection window during the $(k + 1)^{th}$ detection, change the range of the detection window during a $(k + 2)^{th}$ detection to the range of the original detection window.

19. A computer-readable storage medium having computer-executable instructions stored thereon, wherein the computer-executable instructions, when executed by a processor, perform the ranging method of any one of claims 1 to 9.

<u>**10**</u>

S101
Acquire multiple frames of detection data of three-dimensional environment

↓

S102
Predict, based on at least part of previous k frames of detection data, position where obstacle is located in three-dimensional environment during $(k + 1)^{th}$ detection, wherein k is integer, and k ≥ 1

↓

S103
When performing $(k + 1)^{th}$ detection, change, based on predicted position information of obstacle, range of detection window for point on obstacle

↓

S104
Calculate ranging information of at least one point only based on echo information within changed detection window

↓

S105
When no obstacle is detected within range of changed detection window during $(k + 1)^{th}$ detection, change range of detection window during $(k + 2)^{th}$ detection to range of initial detection window

FIG. 1

22

Detector Unit 221-1  Detector Unit 221-2  Detector Unit 221-n

Photodetector 2211

TDC 222-1    TDC 222-2    TDC 222-n

Memory 223-1    Memory 223-2    Memory 223-n

FIG. 2

First detection

lidar    Tof-detected0    OBJ

FIG. 3a

Second detection

lidar    Tof-detected1    OBJ

FIG. 3b

**Third detection**

lidar
Tof-detected2
OBJ

FIG. 3c

**Fourth detection**

lidar
OBJ
Tof-predicted

Tof_predicted-ΔT    Tof_predicted+ΔT

FIG. 3d

Traveling direction

C4

C2

C1

Time point T2

Time point T1

C3

Second frame starts detection at time point T2

First frame starts detection at time point T1

C4

C2

Horizontal FOV

C3

Vertical FOV

LiDAR of C1

C4

C2

Horizontal FOV

C3

Vertical FOV

LiDAR of C1

FIG. 4

First detection sweep

Second detection sweep

Third detection sweep

Fourth detection sweep

Accumulation result of i detection sweeps

Histogram

FIG. 5

**Histogram of a single measurement**

Count of triggered SPADs

0

TOF

FIG. 6

Total of 400 detection sweeps

FIG. 7a

First 300 detection sweeps

FIG. 7b

FIG. 7c

FIG. 8

FIG. 9

FIG. 10

FIG. 11

FIG. 12

**20**

Transmitter
unit **21**

Signal
processor
unit **23**

Photoelectric
detector unit
**22**

Controller **24**

L

L'

FIG. 13

## INTERNATIONAL SEARCH REPORT

| | International application No. |
|---|---|
| | **PCT/CN2022/081307** |

**A.    CLASSIFICATION OF SUBJECT MATTER**

G01S 7/4865(2020.01)i;  G01S 17/89(2020.01)i

According to International Patent Classification (IPC) or to both national classification and IPC

**B.    FIELDS SEARCHED**

Minimum documentation searched (classification system followed by classification symbols)

G01S7/+,; G01S17/+

Documentation searched other than minimum documentation to the extent that such documents are included in the fields searched

Electronic data base consulted during the international search (name of data base and, where practicable, search terms used)

CNTXT, ENTXTC, ENTXT, VEN: 激光, 雷达, 接收, 探测, 像素, 窗口, 调整, 可调, 动态, 激活, 制动, 关闭, 预测, 位置, 距离, 测距, 减小, 节约, 节省, 存储, lidar, laser, receiv+, detect+, SPAD, adjust+, enabl+, disabl+, distance, position, predict+, reduc+

**C.    DOCUMENTS CONSIDERED TO BE RELEVANT**

| Category* | Citation of document, with indication, where appropriate, of the relevant passages | Relevant to claim No. |
|---|---|---|
| X | CN 109212538 A (APPLE INC.) 15 January 2019 (2019-01-15)<br>        description, paragraphs [0027]-[0049], and figures 1-2 and 5A-5C | 1-19 |
| X | CN 111812661 A (SHENZHEN AORUIDA TECHNOLOGY CO., LTD.) 23 October 2020<br>(2020-10-23)<br>        description, paragraphs [0028]-[0069], and figures 2-3 | 1-19 |
| X | CN 110609293 A (SHENZHEN AORUIDA TECHNOLOGY CO., LTD.) 24 December 2019<br>(2019-12-24)<br>        description, paragraphs [0047]-[0062] | 1-19 |
| A | US 2019259899 A1 (TOYOTA CHUO KENKYUSHO K.K.) 22 August 2019 (2019-08-22)<br>        entire document | 1-19 |

☐ Further documents are listed in the continuation of Box C.         ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 June 2022** | **09 June 2022** |

| Name and mailing address of the ISA/CN | Authorized officer |
|---|---|
| **China National Intellectual Property Administration (ISA/<br>CN)<br>No. 6, Xitucheng Road, Jimenqiao, Haidian District, Beijing<br>100088, China** | |
| Facsimile No. **(86-10)62019451** | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br>**PCT/CN2022/081307**</td></tr>
</table>

| Patent document cited in search report | Publication date (day/month/year) | Patent family member(s) | Publication date (day/month/year) |
|---|---|---|---|
| CN 109212538 A | 15 January 2019 | US 2021003680 A1 | 07 January 2021 |
| | | CN 208805571 U | 30 April 2019 |
| | | EP 3646057 A1 | 06 May 2020 |
| | | DE 202018002044 U1 | 25 June 2018 |
| | | WO 2019005260 A1 | 03 January 2019 |
| | | US 2019004156 A1 | 03 January 2019 |
| CN 111812661 A | 23 October 2020 | None | |
| CN 110609293 A | 24 December 2019 | None | |
| US 2019259899 A1 | 22 August 2019 | JP 2019145702 A | 29 August 2019 |

Form PCT/ISA/210 (patent family annex) (January 2015)